# EUROPÄISCHE PATENTSCHRIFT

(11) **EP 3 409 556 B1**
(45) Veröffentlichungstag und Bekanntmachung des Hinweises auf die Patenterteilung: **18.08.2021**
(21) Anmeldenummer: 18174620.7
(22) Anmeldetag: 28.05.2018
(51) Int. Cl.: B61D 17/04, E04B 2/74, E04H 1/12

(54) **VERBUNDSYSTEM, FEUERSCHUTZSCHRANK UND TRANSPORTMITTEL AUFWEISEND EINEN FEUERSCHUTZSCHRANK**
FASTENING SYSTEM, FIRE PROTECTION CABINET AND TRANSPORT MEANS COMPRISING A FIRE PROTECTION CABINET
SYSTÈME DE FIXATION, ARMOIRE DE PROTECTION CONTRE L'INCENDIE ET MOYEN DE TRANSPORT COMPORTANT UNE ARMOIRE DE PROTECTION CONTRE L'INCENDIE

(30) Priorität: 31.05.2017 DE 102017111965
(43) Veröffentlichungstag der Anmeldung: 05.12.2018
(73) Patentinhaber: Bombardier Transportation GmbH, 10785 Berlin (DE)
(72) Erfinder: Dachsel, Stefan, 16761 Hennigsdorf (DE); Langer, Kay, 16761 Hennigsdorf (DE); Schulze, Andreas, 02829 Markersdorf (DE); Trommeshauser, Wolfgang, 16515 Oranienburg (DE); Grützmacher, Sven, 12109 Berlin (DE)
(74) Vertreter: Zimmermann & Partner Patentanwälte mbB

(56) Entgegenhaltungen:
- WO-A1-2005/039949
- DE-A1-102013 214 247
- US-A- 4 650 385

## Beschreibung

### Technisches Gebiet

Die vorliegende Erfindung betrifft ein Verbundsystem mit zwei miteinander verbundenen Strukturen, einen Feuerschutzschrank mit einem solchen Verbundsystem und ein Transportmittel mit einem solchen Feuerschutzschrank. Solche Verbundsysteme kommen beispielsweise beim Aufbau von Schaltschränken in Fahrzeugen zum Einsatz.

### Vorbekannter Stand der Technik

Allgemein ist im Bereich des Schaltschrankbaus und im Fahrzeugbau eine Vielzahl von Verbundsystemen bekannt, wobei mithilfe unterschiedlichster Verbundsysteme anwendungsgemäß gestaltete Komponenten zusammengesetzt werden. Grundsätzlich besteht dabei die Anforderung, dass diese Verbundsysteme eine sichere Gestalt der daraus bestehenden Komponenten ermöglicht.

Häufig werden Verbundsysteme dazu verwendet, um unter anderem daraus Schaltschränke für Funktionskomponenten - zum Beispiel elektrische Komponenten - aufzubauen. Wenn diese elektrische oder energieführende Komponenten aufzunehmen sollen, so können diverse Feuerschutzmaßnahmen zur Anwendung kommen.

In der europäischen Patentanmeldungsschrift EP 1 682 394 B1 wird eine Feuerschutzwand vorgeschlagen, wobei eine Vorderseite davon im Brandfall einem Feuer ausgesetzt ist. Dazu sind Wandabschnitte von Rahmenelementen umgeben, wobei mithilfe eines intumeneszenten Materials und von elastischen Dichtungen ein besserer Schutz gegen ungewollt austretende Rauchgase, und somit ein günstigeres Verhalten im Brandfall erreicht wird. In der DE 10 2013 214 247 A1 wird eine Blindnietmutter mit einem Innengewinde gezeigt, woran ein Bauteil mittels Schraube befestigt werden kann.

### Nachteile des Standes der Technik

Die bisher bekannten Lösungen können hinsichtlich ihres Verhaltens im Brandfall weiter optimiert werden, wobei insbesondere der Widerstand gegen die Ausbreitung eines Brandherdes und gegen unerwünschte Folgen eines Feuers zu erhöhen ist. Weiterhin sind bekannte Systeme verhältnismäßig komplex aufgebaut oder gestatten nur eine beschränkte Wirkung hinsichtlich des Brandschutzes.

### Problemstellung

Eine Aufgabe der vorliegenden Erfindung ist es daher, eine ein Verbundsystem, ein Feuerschutzschrank mit einem solchen Verbundsystem und ein Transportmittel mit einem solchen Feuerschutzschrank bereitzustellen, wobei die generellen Brandschutzeigenschaften verbessert sind, und das Ausbreiten eines Brandherdes effektiv und effizient verhindert oder verlangsamt wird.

### Erfindungsgemäße Lösung

Die obige Aufgabe wird durch ein Verbundsystem nach Anspruch 1, ein Feuerschutzschrank nach Anspruch 11 und/oder durch ein Transportmittel nach Anspruch 14 gelöst. Weitere vorteilhafte Ausführungsformen ergeben sich aus den abhängigen Unteransprüchen.

Das Verbundsystem weist dazu eine erste und eine dazu zumindest teilweise parallel angeordnet zweite Struktur auf, wobei sich die erste Struktur in einer Längsrichtung erstreckt. Die Parallelität der ersten und zweiten Struktur ist an einer Längsrichtung oder Längserstreckung der zweiten Struktur orientiert. Weiterhin ist eine Verbindungsvorrichtung vorgesehen, welche die Strukturen in einer Axialrichtung der Verbindungsvorrichtung senkrecht durchragt. Die Axialrichtung erstreckt sich dabei im Wesentlichen senkrecht zur Längsrichtung.

Weiterhin sind beide Strukturen aus unterschiedlichen Werkstoffen hergestellt, wobei die unterschiedlichen Werkstoffe voneinander verschiedene Wärmeausdehnungskoeffizienten, insbesondere in Längsrichtung, innehaben.

Beispielsweise beträgt ein erster Wärmeausdehnungskoeffizient des ersten Werkstoffs der ersten Struktur, insbesondere in Richtung der Längsrichtung, folglich Längsausdehnungskoeffizient genannt, weniger als 13x10⁻⁶ pro Kelvin (°K⁻¹) betragen, insbesondere weniger als 12,5x10⁻⁶ pro Kelvin (°K⁻¹), und/oder weniger als 12x10⁻⁶ pro Kelvin (°K⁻¹).

Unabhängig davon oder zusätzlich zu dem oben Gesagten kann ein zweiter Wärmeausdehnungskoeffizient des zweiten Werkstoffs der zweiten Struktur, insbesondere deren Längsausdehnungskoeffizient, als mehr als 13x10⁻⁶ pro Kelvin (°K⁻¹), insbesondere größer als 13,1x10⁻⁶ pro Kelvin (°K⁻¹), und/oder größer als 13,5x10⁻⁶ pro Kelvin (°K⁻¹) betragen. Weiterhin kann gemäß einer günstigen Ausgestaltung der Wärmeausdehnungskoeffizient der zweiten Struktur kleiner als 16,6x10⁻⁶ pro Kelvin (°K⁻¹) sein.

Beide Strukturen sind an einer Befestigungsstelle aneinander verbunden. Beispielsweise kann an einer oder an beiden Strukturen dazu eine Befestigungsvorrichtung an der Befestigungsstelle der Strukturen vorgesehen sein, wobei die strukturelle Verbindung zwischen beiden Strukturen mittels Formschluss, Reibschluss und/oder Stoffschluss fest realisiert sein kann. Auf diese Weise sind beide Strukturen mindestens bezüglich der Längsrichtung an der Befestigungsstelle miteinander geometrisch verschränkt.

Weiterhin weist das Verbundsystem mindestens eine Verbindungsstelle auf, an welcher die Verbindungsvorrichtung wirksam vorgesehen ist. Die Verbindungsstelle ist bezüglich der Befestigungsstelle in Längsrichtung mit Abstand versetzt angeordnet. Dazu sind die erste Struktur und die zweite Struktur an der Verbindungsstelle derart geeignet ausgebildet, dass die Verbindungsvorrichtung wirksam unter Einbeziehung der ersten Struktur in der zweiten Struktur so angeordnet werden kann, sodass mittels der Verbindungsvorrichtung eine Montagenormalkraft zwischen der ersten und der zweiten Struktur erzeugt werden kann. Insbesondere wirkt diese Montagenormalkraft senkrecht zur Längsrichtung zwischen der ersten und der zweiten Struktur. Somit bildet sich senkrecht zur Montagenormalkraft, also in Längsrichtung, eine Haftkraft wirksam zwischen der ersten und zweiten Struktur aus. Bedingt durch diese Haftkraft sind die erste und die zweite Struktur miteinander, zumindest in Längsrichtung, mittels Reibschluss geometrisch verschränkt. Mit anderen Worten, die Verbindungsvorrichtung erzeugt an der Verbindungsstelle eine Normalkraft, welche die erste Struktur und die zweite Struktur direkt oder mittelbar in Normalrichtung aneinanderpresst, und somit die verschränkende Reibungs-Haftkraft erzeugt.

Die erste und die zweite Struktur sind an der Verbindungsstelle und einer Befestigungsstelle miteinander fest verbunden, und folglich hinsichtlich ihrer Verbindung statisch überbestimmt, da diese mindestens zweifach miteinander verschränkt sind.

Beide Strukturen können im Bereich der Verbindungsstelle jeweils eine Aufnahme aufweisen, worin/woran jeweils ein Vorrichtungsabschnitt der Verbindungsvorrichtung formschlüssig und/oder reibschlüssig aufgenommen/angeordnet sein kann. Mindestens eine der Aufnahmen weist dabei mindestens in Längsrichtung eine größere geometrische Gestalt (zum Beispiel Länge und/oder Durchmesser) als der in oder an dieser vergrößerten Aufnahme angeordnete Vorrichtungsabschnitt auf. Rein geometrisch ist mindestens eine der Aufnahmen größer als der darin oder der daran anzuordnende Vorrichtungsabschnitt der Verbindungsvorrichtung, sodass der Vorrichtungsabschnitt in der vergrößerten Aufnahme mit einem bestimmten Spiel, insbesondere in Längsrichtung, aufgenommen oder angebracht werden kann. So wird bewirkt, dass die Verbindungsvorrichtung in der Struktur mit der vergrößerten Aufnahme mindestens in Längsrichtung verschiebbar anordenbar ist.

Die Begriffe "verschiebbar" und "... unter Spiel" bedeuten, dass die Verbindungsvorrichtung bei bestimmungsgemäßer Anordnung zum festen Verbindung der ersten und der zweiten Struktur ausschließlich im Rahmen einer Kompensation von unterschiedlichen Dehnungen der Strukturen in der vergrößerten Aufnahme verschiebbar sind bzw. unter Spiel darin angeordnet.

Bevorzugter Weise ist das Verbundsystem und/oder einzelne oder mehrere der in diesem Kontext vorgesehenen Komponenten und Strukturen so dimensioniert, angeordnet und/oder gestaltet, dass das Verbundsystem bei einer Änderung der Temperatur seine strukturelle Anordnung beibehält. Wenn es also im Falle einer Temperaturänderung an oder in der Umgebung des Verbundsystems zu einer unterschiedlichen thermischen Längenausdehnung der ersten und der zweiten Struktur kommt, so bleibt das Verbundsystem in einer grundlegenden Struktur bestehen, und/oder es kommt insbesondere nicht zu einer funktionsbeeinträchtigenden Verformung und/oder Verspannen des Verbundsystems oder einzelner Komponenten davon.

Dies wird dadurch erreicht, dass das Verbundsystem in der Lage ist, unterschiedliche thermische Dehnung in der ersten und der zweiten Struktur, insbesondere in einem gewissen Maße und/oder ab einer gewissen Temperaturdifferenz, zu kompensieren. Dabei werden strukturelle Spannungen - bedingt durch die unterschiedlichen thermischen Dehnung und durch die statische Überbestimmung - in eine tolerierte Verschiebung zwischen den Strukturen untereinander zugelassen, ohne dass dabei die gewünschte körperliche Struktur des Verbundsystems funktionsbeeinträchtigend verändert wird.

Bezogen auf das beschriebene Verbundsystem kann dies wie folgt vonstattengehen: Die erste und die zweite Struktur des Verbundsystems sind an der Befestigungsstelle und an der Verbindungsstelle oder an zwei Befestigungsstellen in Längsrichtung versetzt miteinander verbunden. Wird das Verbundsystem nun einer Temperaturänderung ausgesetzt, so dehnt sich die erste Struktur unterschiedlich von der zweiten Struktur, d.h. die Dehnung der ersten Struktur ist entweder kleiner oder größer als die thermische Dehnung der zweiten Struktur. Dies führt, insbesondere in Längsrichtung, zu einem Spannungsaufbau zwischen der Verbindungsstelle und der Befestigungsstelle oder zwischen den Verbindungsstellen, und zu einer daraus resultierenden Längsausdehnungskraft (oder auch Längsschrumpfungskraft). Dies kann zu einer strukturellen Beeinträchtigung des Verbundsystems führen, beispielsweise durch Verbiegen, Brechen, etc.

Die erste Struktur, die zweite Struktur und/oder die Verbindungsvorrichtung sind derart ausgestaltet, dass die die Haftkraft erzeugende Montagenormalkraft maximal nur so hoch gewählt ist bzw. ausgeprägt ist, dass die Haftkraft durch die thermisch und geometrisch bedingte Längsausdehnungskraft überwunden wird, bevor es zu einer funktionsbeeinträchtigenden Veränderung des Verbundsystems kommt.

Diese geometrische Kompensationsmöglichkeit wird dabei unter anderem durch das Spiel ermöglicht, welches zwischen der vergrößerten Aufnahme und dem dazu gehörigen Verbindungsabschnitt vorhanden ist. Überschreitet die thermisch verursachte Längsausdehnungskraft an der Verbindungsstelle die Haftkraft, so verschiebt sich der Verbindungsabschnitt in der vergrößerten Aufnahme mindestens in Richtung des Kraftvektors der Längsausdehnungskraft. Durch das vorgesehene Spiel kann sich die thermische Dehnung geometrisch realisieren, wodurch die Längsausdehnungskraft und der dieser zu Grunde liegende Verspannungszustand abgebaut wird.

Auf diese Weise wird erstmalig erreicht, also durch Wahl einer geeigneten geometrischen Struktur und/oder von geeigneten geometrischen und stofflichen Komponentencharakteristika, dass das Verbundsystem eine thermische Längendilatation aufnehmen kann und die funktionsrelevante Struktur des Verbundsystems erhalten bleibt. Somit kann das Verbundsystem besonders vorteilhaft im Zusammenhang mit Feuerschutzvorrichtungen verwendet werden.

Gemäß einer Ausführungsform kann das Verbundsystem eine weitere Verbindungsvorrichtung und eine weitere Verbindungstelle aufweisen, wobei die Befestigungsstelle als diese weitere Verbindungsstelle ausgebildet sein kann. Die erste und zweite Struktur sind dabei zusätzlich mittels der weiteren Verbindungsvorrichtung an der weiteren Verbindungsstelle miteinander verbunden. Beispielsweise sind die erste Struktur und die zweite Struktur an mindestens einer ersten und einer zweiten Verbindungsstelle unter Verwendung einer ersten und einer zweiten Verbindungsvorrichtung miteinander verbunden. Dabei kann eine Längendilatation bzw. Längsverspannung mit Hilfe der beschriebenen Kompensationsfunktion der Verbindungsstellen im Zusammenwirken mit den Verbindungsvorrichtungen kompensiert werden.

Gemäß einer weiteren Ausprägung, können eine Mehrzahl von Verbindungsstellen und Verbindungsvorrichtungen zwischen der ersten und zweiten Struktur vorgesehen sein.

In Erweiterung des Grundprinzips wird erfindungsgemäß vorgeschlagen, dass die Verbindungsvorrichtung und die damit in Zusammenhang stehenden Strukturen geometrisch derart gestaltet sind und derartige Elastizitätscharakteristika aufweisen, sodass in montiertem Zustand die bestimmte Montagenormalkraft (F) zwischen den Strukturen erzeugt wird. Das tribologische System zwischen der ersten Struktur, der zweiten Struktur, der Verbindungsvorrichtung und/oder der vergrößerten Aufnahme ist dabei derart gestaltet, dass die thermisch bedingte Längsausdehnungskraft erst bei einer Temperaturveränderung von mehr als 60 °K, bevorzugt mehr als 80 °K und besonders bevorzugt mehr als 100 °K, zumindest in der relevanten Richtungskomponente die von der Montagenormalkraft verursachte Haftkraft überschreitet. Somit ist das Verbundsystem in der Lage, eine Temperaturänderung von 60 °K, bzw. 80 °K, bzw. 100 °K, insbesondere ohne eine Verschiebung an den Verbindungsstellen zu erfahren, zu tolerieren, wobei ab dem Überschreiten der genannten Temperatur die Verbindungsvorrichtung in der vergrößerten Aufnahme verrutscht und somit die aus der thermischen Dilatation verursachte Spannung zwischen den Strukturen abbaut.

Die Temperaturänderung findet dabei in der unmittelbaren Umgebung der ersten und der zweiten Struktur, bzw. in der Umgebung des Verbundsystems statt. Die Temperaturänderung bestimmt sich dabei zum einen an einer Ausgangstemperatur, wobei keine wesentlichen Spannungen zwischen der ersten Struktur und der zweiten Struktur vorhanden sind. Weiterhin definiert sich die Temperaturänderung an einer weiteren, veränderten Temperatur, welche über oder unter der Ausgangstemperatur liegt und beispielsweise durch einen Brand hervorgerufen ist.

Die günstigen Anwendungseigenschaften des beschriebenen Verbundsystems zeigen sich besonders vorteilhaft, wenn die erste Struktur als Flächenstruktur und die zweite Struktur als eine Tragstruktur zum Tragen der Flächenstruktur ausgebildet ist. Insbesondere kann aus der Flächenstruktur und einer geeigneten Tragstruktur ein Gegenstand, zum Beispiel ein Schaltschrank oder eine Brandschutzwand, gebildet werden, wobei dieser Gegenstand eine besonders hohe strukturelle Resistenz im Falle einer unerwünschten Temperaturerhöhung (Feuer) oder Verringerung aufweist. Dabei könnte auf einer Seite des Schaltschranks oder der Brandschutzwand eine Temperaturerhöhung durch einen Brandherd stattfinden, wobei die damit verbundene Temperaturänderung nicht zu einer Zerstörung des Gegenstands - bedingt durch eine unterschiedliche Dehnung der Flächenstruktur und der Tragstruktur - führen würde. Wenn sich beispielsweise die Tragstruktur stärker ausdehnte als die Flächenstruktur, so würde ab den oben genannten Temperaturänderungen die in Längsrichtung fest mit der Flächenstruktur verbundene Verbindungsvorrichtung in der Aufnahme der Tragstruktur - bei entgegen gesetzter Ausführung der Verbindungsstelle umgekehrt - durchrutschen.

Weiterhin weist die Verbindungsvorrichtung geeignete Verbindungsmittel mit einem ersten Axialanschlag und einem zweiten Axialanschlag auf. Der erste und zweiter Axialanschlag sind dabei in Axialrichtung der Verbindungsvorrichtung beabstandet, wobei der zweite Axialanschlag hinsichtlich seiner axialen Position bezüglich des ersten Axialanschlag einstellbar positioniert werden kann. Der Abstand zwischen dem ersten und zweiten Axialanschlag ist somit je nach Bedarf variierbar. Weiterhin sind zwischen dem ersten und zweiten Axialanschlag eine Abstandshülse, ein axialwirkendes Dichtelement und ein Spannelement vorgesehen.

Ist die Verbindungsvorrichtung zwischen der Flächenstruktur und der Tragstruktur bestimmungsgemäß montiert, so wird zwischen den Axialanschlägen ein minimaler axialer Klemmabstand ausgebildet, wobei das Dichtelement zwischen der Tragstruktur und der Flächenstruktur angeordnet ist, und das Spannelement zum Übertragen der Montagenormalkraft zwischen dem ersten Axialanschlag und dem Flächenelement, oder andersherum, angeordnet ist.

Die Flächenstruktur und die Tragstruktur weisen jeweils axiale Flächenabschnitte auf, über welche die Montagenormalkraft teilweise oder vollständig zwischen der Verbindungsvorrichtung und der Flächenstruktur bzw. Tragstruktur übertragen werden kann. Dabei kann die Montagenormalkraft unmittelbar oder über ein Zwischenelement von dem jeweiligen Axialanschlag in die Flächenstruktur bzw. Tragstruktur eingetragen werden.

Gemäß einer weiteren Ausführungsform sind die Komponenten zumindest teilweise derart gestaltet, dass die Montagenormalkraft durch Bereitstellen des Klemmabstands zwischen den Axialanschlägen und durch Zusammenpressen des Spannelements der Flächenstruktur, des Dichtelements und der Tragstruktur zwischen den Axialanschlägen auf den Klemmabstand erzeugt wird.

Weiterhin kann die Verbindungvorrichtung einen Klemmring aufweisen, der in Axialrichtung parallel zum Dichtelement angeordnet ist.

Gemäß einer weiteren Ausführungsform weist das Spannelement ein Dämpfungselement, einen Topf mit einem Topfboden zum Aufnehmen des Dämpfungselements und mit einer Topfschulter zum Einleiten der Montagenormalkraft in den axialen Flächenabschnitt der Flächenstruktur (oder in die Tragstruktur, je nach Einbaurichtung der Verbindungsvorrichtung) auf. Dabei ist das Dämpfungselement in der Axialrichtung gegenüber dem ersten Axialanschlag und dem Topfboden abgestürzt, d.h. dass das Dämpfungselement axial zwischen dem ersten Axialanschlag und dem Topfboden platziert ist.

Insbesondere kann der Topf eine kegelstumpfähnliche Form aufweisen, wobei der Topfboden von den kegelstumpfähnlich verlaufenden Seitenwänden des Topfes radial umgeben ist, die wiederum in die Topfschulter übergehen. Dies bedingt einen besonders günstigen Kraftfluss zwischen dem ersten Axialanschlag und dem axialen Flächenabschnitt der Flächenstruktur. Weiterhin wird so die auftretende Flächenpressung auf der Flächenstruktur ausreichend niedrig gehalten.

Im Zuge einer Präzisierung wird offenbart, dass die vergrößerte Aufnahme in der Tragstruktur vorgesehen ist. Dabei weist die vergrößerte Aufnahme in Längsrichtung und senkrecht zur Axialrichtung einen Gleitabstand aus, welcher durch zwei Gleitflanken begrenzt ist. Dabei ist die vergrößerte Aufnahme derart Langloch-ähnlich ausgebildet, sodass der entsprechende Vorrichtungsabschnitt der Verbindungsvorrichtung drehfest, jedoch in Längsrichtung verschiebbar- Nutenstein-ähnlich - in der vergrößerten Aufnahme gelagert ist.

Gemäß einer vorteilhaften Ausgestaltung ist die Tragstruktur aus Baustahl oder Edelstahl hergestellt.

Die Flächenstruktur umfasst im Wesentlichen einen nicht brennbaren, feuerabweisenden und/oder Temperaturisolierenden Werkstoff.

Im Rahmen der Erfindung wird weiterhin ein Feuerschutzschrank zum Aufnehmen von elektrischen Komponenten offenbart, welcher unter anderem aus einem Traggerüst und daran befestigten Wandpaneele gebildet wird. Dabei definiert die Gesamtheit der Wandpaneele einen Innenraum des Feuerschutzschranks, wobei das Traggerüst im Innenraum vorgesehen sein kann. Alternativ dazu kann das Traggerüst auch günstiger Weise außerhalb des Innenraums angebracht sein.

Das Traggerüst und die Wandpaneele werden durch ein Verbundsystem gemäß einer oder mehrerer der im vorherigen beschriebenen Ausführungsformen zusammengesetzt. Das Traggerüst umfasst deshalb eine Mehrzahl von Tragstrukturen, und ein Wandpaneel weist mindestens eine Flächenstruktur auf. Zudem sind in dem Wandpaneel in Längsrichtung einer jeweiligen Tragstruktur mindestens zwei vergrößerte Aufnahmen für den Vorrichtungsabschnitt der Verbindungsvorrichtung vorgesehen. Dies bewirkt, dass die Flächenstruktur in Längsrichtung einer Tragstruktur des Traggerüsts in einem gewissen Maße verschiebbar angeordnet ist.

Die Flächenstruktur ist dabei nicht brennbar, insbesondere nicht entflammbar bis 783 °C, ausgebildet.

Der Feuerschutzschrank weist alternativ oder zudem eine derart geeignete Gesamtkonzeption auf, sodass bei einer Innentemperatur von bis zu 783 °C die Außentemperatur stets 140 °K niedriger ist. Dies erfolgt durch Auswahl eines geeigneten Dichtigkeitskonzepts und/oder durch die Verwendung von wärmeflusshemmenden Werkstoffen.

Gemäß einer weiteren Ausführungsform ist ein Wandpaneel mit mindestens drei Verbindungsvorrichtungen in einer Längsrichtung einer Tragstruktur des Traggerüsts befestigt.

Mit einem Feuerschutzschrank gemäß einer oder mehrere der oben beschriebenen Ausführungsformen wird zum ersten Mal ein effektiver Brandschutz für einen Feuerschutzschrank und für die Umgebung des Feuerschutzschranks ermöglicht, wobei der Feuerschutzschrank eine hohe strukturelle Resistenz bei hoher thermischer Belastung aufweist. Entwickelt sich innerhalb des Feuerschutzschranks beispielsweise ein Brandherd, wird zum einen wirksam verhindert bzw. erschwert, dass der Brand auf die Umgebung übergreift, insbesondere dadurch, dass die Struktur des Feuerschutzschranks auch bei einer stark erhöhten Innentemperatur erhalten bleibt. Dies wird erstmalig erreicht, indem die temperaturbedingte Ausdehnung eines Wandpaneels und des Tragsystems nicht zu spannungsbedingten Schäden an dem Feuerschutzschrank führt.

Weiterhin kann der Feuerschutzschrank mindestens eine Kompensationseinrichtung zum Kompensieren einer thermischen Längendilatation einer Tragstruktur aufweisen. Dabei ist die Kombinationseinrichtung innerhalb einer Tragstruktur und/oder zwischen zwei Elementen einer Tragstruktur angeordnet. Dies führt vorteilhaft dazu, dass eine thermische Ausdehnung einer Tragstruktur oder von Teilen des Traggerüsts innerhalb des eigentlichen Traggerüsts durch Verschiebung in Längsrichtung einer Tragstruktur kompensiert wird. Eine temperaturbedingte Ausdehnung der Tragstruktur kann somit aus ihr selbst heraus kompensiert werden.

Gemäß einer vordersten Weiterentwicklung weist die Kompensationseinrichtung dazu eine vorgespannte Verbindungseinrichtung auf, die zwischen zwei Strukturteilen einer Tragstruktur und/oder zwischen zwei Tragstrukturen zum Erzeugen einer Montagenormalkraft angeordnet ist. Entsprechend ist in mindestens einem Strukturteil und/oder in mindestens einer der Tragstrukturen ein Langloch zum Aufnehmen der Verbindungseinrichtung der Kompensationseinrichtung vorgesehen. Folglich kann eine thermische Dehnung durch eine Relativbewegung senkrecht zur Montagenormalkraft zwischen zwei Strukturteilen einer Tragstruktur und/oder zwischen Tragstrukturen kompensiert werden.

Besonders vorteilhaft zeigt sich die Verwendung des beschriebenen Feuerschutzschranks in einem Transportmittel, insbesondere in einem Transportmittel größerer Dimension. Ein solches Transportmittel kann beispielsweise ein Bus, ein Schienenfahrzeug, ein Waggon oder eine Lokomotive eines Schienenfahrzeugs, ein aus mehreren Waggons oder Triebfahrzeugen bestehender Zug oder ein Luftfahrzeug zum Transport von einer großen Anzahl von Personen, ein Fahrzeug zum Transport von großen Lasten, zum Beispiel ein Lastkraftwagen, ein Cargoflugzeug oder ein Güterwaggon sein.

Den beschriebenen Fahrzeugen wohnt es inne, dass diese die Dimensionen eines PKWs um ein Vielfaches überschreiten und eine hohe Anzahl von Wärme erzeugenden, insbesondere elektrischen Komponenten aufweisen. Diese Komponenten werden gebündelt in einem oder wenigen Schaltschränken angesiedelt, wodurch diese Komponenten zentral mit Energie versorgt und mit Signalverbindungen verbunden werden können. Der erfindungsgemäße Feuerschutzschrank erweist sich hierzu als besonders geeignet, da mit einem solchen sichergestellt werden kann, dass die teilweise empfindlichen Komponenten nicht durch Materie aus der Umgebung beschädigt oder verschmutzt werden (Mikropartikel, Staub, etc.), und gleichzeitig eine große Menge von Abwärme aus dem Innenraum des Schaltschranks abgeführt werden kann. Im Fall einer Havarie innerhalb oder außerhalb des Feuerschutzschranks wird effizient verhindert oder verlangsamt, dass ein Brand innerhalb des Feuerschutzschranks auf den Feuerschutzschrank umgebende Transportmittel übergreift und größeren Schaden anrichten kann.

Die voranstehenden beschriebenen Ausführungsformen können beliebig, jedoch in sinnhafter Weise miteinander kombiniert werden. Beispielsweise kann eine geeignete Brandschutzwand für ein Transportmittel aus geeignet angeordneten Tragstrukturen und daran angeordneten Flächenstrukturen dargestellt werden. Außerdem ist beispielsweise denkbar, die Anordnung und Wirkweise der Verbindungsvorrichtung an der Flächenstruktur bzw. an der Tragstruktur hinsichtlich ihrer Anordnung umzudrehen.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.
Fig. 1 zeigt, einen Innenraum eines Schienenfahrzeugs von oben, wobei der innere Aufbau des Schienenfahrzeugs und die Position von Feuerschutzschränken verdeutlicht wird,
Fig. 2 eine perspektivische Sicht in einen exemplarischen Feuerschutzschrank gemäß Fig. 1,
Fig. 3 einen perspektivischen Schnitt durch eine Verbindungsstelle einer Tragstruktur und einer Flächenstruktur eines Feuerschutzschranks gemäß Fig. 2,
Fig. 4 einen Querschnitt durch eine Verbindungsstelle gemäß Fig. 3 senkrecht zur Längsrichtung einer Tragstruktur,
Fig. 5 eine perspektivische Ansicht auf einen Eckbereich des Feuerschutzschranks gemäß Fig. 2,
Fig. 6 eine perspektivische Sicht auf eine Tragstruktur mit einer Kompensationseinrichtung eines Feuerschutzschranks gemäß Fig. 2,
Fig. 7 eine Seitenansicht einer Kompensationseinrichtung in einem Eckbereich eines Feuerschutzschranks gemäß Fig. 5, und
Fig. 8 eine perspektivische Sicht auf eine T-Verbindung zweiter Tragstrukturen.

### Ausführungsbeispiele

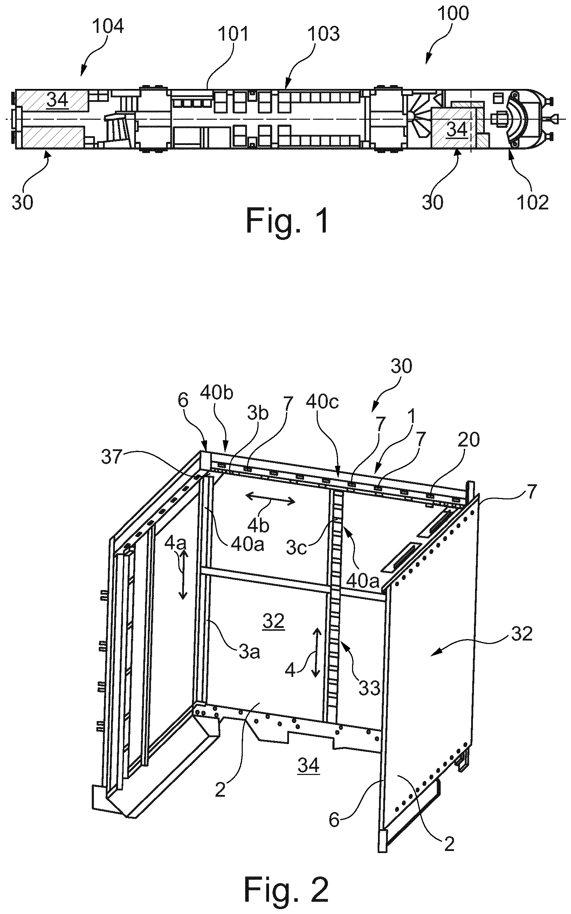

Zur Verdeutlichung des Gesamtzusammenhangs wird in Fig. 1 ein beispielhaftes Schienenfahrzeug 100 mit einem Wagenkasten 101 dargestellt. Der Wagenkasten 101 des Schienenfahrzeugs 100 ist zum Beispiel in einen Steuerabschnitt 102 für einen Fahrzeugführer, einen Sitzbereich 103 für Fahrgäste und in einen Übergangsbereich 104 unterteilt. Dabei sind im Bereich des Steuerabschnitts 102 und im Übergangsbereich 104 jeweils Feuerschutzschränke 30 zur Aufnahme von elektrischen Komponenten angeordnet. Dieses räumliche Konzept macht offenbar, dass die Ausführung der Schaltschränke als Feuerschutzschränke 30 einen wesentlichen Schutz vor Verletzung für Fahrgäste und Fahrzeugführer in dem Wagenkasten 101 bewirkt. Die Feuerschutzschränke 30 verhindern bzw. verlangsamen den Prozess, dass ein im Schaltschrank entstehender Brand auf einen Bereich mit anwesenden Menschen im Schienenfahrzeug 100 übergreift und diese gefährdet.

In Fig. 2 ist ein solcher Feuerschutzschrank 30 in einer teiloffenen Ansicht wiedergegeben, wobei eine obere Wandung, ein Boden und eine vordere Wandung des Feuerschutzschranks 30 aus Darstellungsgründen nicht wiedergegeben sind.

Der Feuerschutzschrank 30 umfasst ein fachwerkartiges Traggerüst 33, das unter anderem aus mehreren Tragstrukturen 3 zusammengesetzt ist. Weiterhin sind aus Flächenstrukturen 2 gebildete Wandpaneele 32 vorgesehen, welche die Wandungen des Feuerschutzschranks 30 darstellen.

Im vorliegenden Beispiel werden die Seitenwände des Feuerschutzschranks 30 jeweils von zwei rechteckigen Flächenstrukturen 2 bzw. Wandpaneele 32 gebildet. Die Tragstrukturen 3 verlaufen dabei unter anderem vertikal und horizontal, wobei sich bezogen auf jede Tragstruktur eine Längsrichtung 4 ergibt. Die Flächenstrukturen 2 können in den Eckbereichen des Feuerschutzschranks 30 an den dort vorhandenen Tragstrukturen 3 über fixe Befestigungsstellen 6 befestigt sein. Weiterhin sind Verbindungsstellen 7 vorgesehen, an denen die Flächenstruktur 3 der Wandpaneele 32 an den entsprechenden Tragstrukturen 3 mithilfe einer Verbindungsvorrichtung 10 fixiert sind.

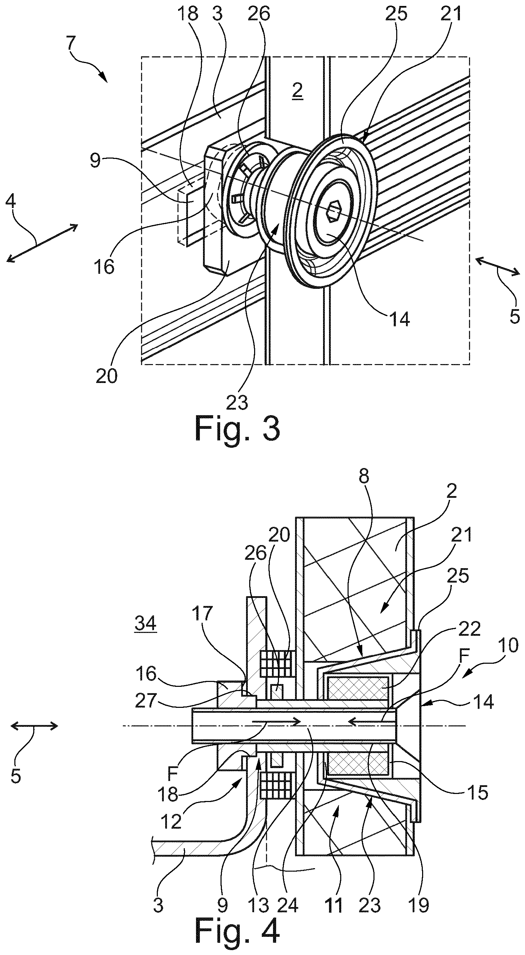

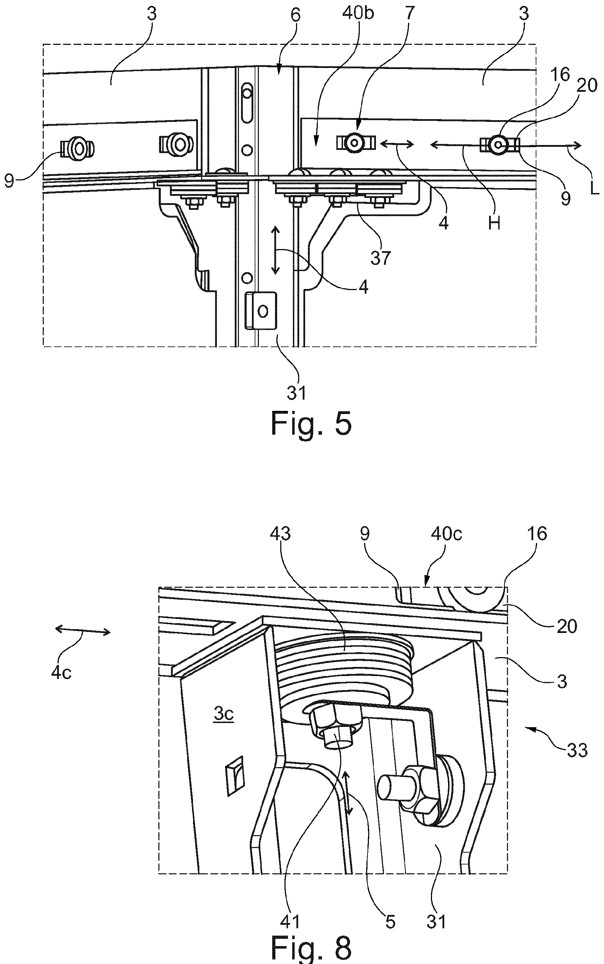

Mithilfe der Fig. 3, Fig. 4 und auch Fig. 5 wird die Wirkungsweise des Kompensationsmechanismus' unterschiedlicher thermischer Dehnungen einer Tragstruktur 3 des Traggerüsts 33 und Flächenstruktur 2 eines Wandpaneels 32 grafisch verdeutlicht.

Mithilfe der Verbindungsvorrichtung 10, umfassend geeignete Verbindungsmittel 13, werden eine Flächenstruktur 2 und eine Tragstruktur 3 mit einer Montagenormalkraft F in einer Axialrichtung 5 der Verbindungsvorrichtung 10 aufeinandergepresst und somit aneinander befestigt. Die Montagenormalkraft F erzeugt dabei eine in Längsrichtung wirkende Haftkraft H, wodurch sich zwischen Tragstruktur 3 und Flächenstruktur 2 eine reibschlüssige Verbindung ergibt. Beispielsweise können die Verbindungsmittel 13 als Schraube mit Schraubenkopf 14 und einer Schraubenmutter 16 ausgebildet sein, sodass die Montagenormalkraft F zwischen der Schraubenmutter 16 und dem Schraubenkopf 14 erzeugt wird.

Wird, beispielsweise durch einen Brand im Innenraum 34 des Feuerschutzschranks 30, die Temperatur im Innenraum 34 erhöht, so wird dadurch eine thermische Dehnung einer Tragstruktur 3 des Traggerüsts 33 und einer Flächenstruktur 2 eines Wandpaneels 32 hervorgerufen. Aufgrund der unterschiedlichen Wärmekoeffizienten einer Tragstruktur 3 und einer Flächenstruktur 2 ergibt sich bei gleicher Erwärmung eine unterschiedliche Längendilatation dieser.

Weiterhin ist die Flächenstruktur 2 an der Befestigungsstelle 6 und an mindestens einer Verbindungsstelle 7 mit dem Traggerüst 33 bzw. mit einer entsprechenden Tragstruktur 3 fest verbunden. Aus diesem Grund führt eine unterschiedliche Längendilatation der Flächenstruktur 2 und der Tragstruktur 3 zum Entstehen von Verspannungen zwischen den Strukturen, welche sich wiederum in einer Längsausdehnungskraft L in Längsrichtung 4 ausdrückt. Überschreitet die Längsausdehnungskraft L die Haftkraft H so beginnt sich die stärker ausdehnende Tragstruktur 3 an der entsprechenden Verbindungsstelle 7 gegenüber der Flächenstruktur 2 zu verschieben. Insbesondere überschreitet die Längsausdehnungskraft L die Haftkraft H, wenn sich die Strukturen 2 und 3 um mindestens 60 °K erwärmen.

Die Verbindungsvorrichtung 10 weist einen Flächenstruktur-seitigen Vorrichtungsabschnitt 11, insbesondere aufweisend Schraubenmutter 16, und einen Tragstruktur-seitigen Vorrichtungsabschnitt 12, insbesondere aufweisend den Schraubenkopf 14, auf, die in eine dafür vorgesehene Aufnahme 8 in der Flächenstruktur 2 bzw. in eine vergrößerte Aufnahme 9 der Tragstruktur 3 eingreifen. Die vergrößerte Aufnahme 9 der Tragstruktur 3 ist in Form eines sich in Längsrichtung 4 erstreckenden Langlochs gestaltet, in welches der Tragstruktur-seitige Vorrichtungsabschnitts 12 der Verbindungsvorrichtung 10 unter Spiel in Längsrichtung 4 eingreifen kann. Somit ist die Verbindungsvorrichtung 10 über den Tragstruktur-seitigen Vorrichtungsabschnitt 12 in Längsrichtung 4 verschiebbar in der vergrößerten Aufnahme 9 aufgenommen. Die Begriffe "verschiebbar" und "... unter Spiel" bedeuten hierbei, dass die Verbindungsvorrichtung 10 nur im Rahmen der thermischen Dilatationskompensation in der vergrößerten Aufnahme 9 verschiebbar ist bzw. unter Spiel steht. Im normalen, stimmungsmäßigen Betrieb besteht eine feste, unterschiedliche Verbindung zwischen der Verbindungsvorrichtung 10 und der vergrößerten Aufnahme 9 der Tragstruktur 3.

Die Schraubenmutter 16 des Tragstruktur-seitigen Vorrichtungsabschnitts 12 kann dabei mit zwei abgeflachten, parallelen und gegenüberliegenden Radialflanken 27 versehen sein. Der Abstand dieser Radialflanken 27 entspricht dabei der Breite des Langlochs senkrecht zur Längsrichtung 4, wobei die vergrößerte Aufnahme an diesen den Radialflanken 27 entsprechende Gleitflanken 18 aufweist. Im Fall dass die Verbindungsmittel 13 andersartig gestaltet sind, würde eine der Schraubenmutter 16 entsprechende Komponente ebenfalls entsprechende Radialflanken 27 aufweisen.

Die Verbindungsvorrichtung 10 umfasst einen ersten Axialanschlag 15 und einen zweiten Axialanschlag 17, welche dazu vorgesehen sind, die Montagevorspannkraft F in die Tragstruktur 3 und in die Flächenstruktur 2 in Axialrichtung 5 einzutragen.

Weiterhin ist der Tragstruktur-seitige Vorrichtungsabschnitt 12, insbesondere die Schraubenmutter 16, mit einem zweiten Axialanschlag 17 versehen, worüber in Axialrichtung 5 wirksame Kräfte von der Schraubenmutter 16 auf die Tragstruktur 3 übertragen werden können.

Folglich kann die Schraubenmutter 16 bis zum Anliegen des zweiten Axialanschlags 17 mit den Radialflanken 27 in Axialrichtung 5 in die vergrößerte Aufnahme 9 eingelegt werden. Entsprechend der vergrößerten Aufnahme 9 ist somit die Schraubenmutter 16 in Längsrichtung 4 zwischen den Gleitflanken 18 verschiebbar, wobei die Radialflanken 27 von den Gleitflanken 18 geführt werden.

Gemäß einer Ausführungsform sind die Verbindungsmittel 13 als Schraube ausgebildet, die in die Schraubenmutter 16 eingeschraubt werden kann. Über einen Schraubenkopf 14 mit einer Scheibe wird die Montagevorspannkraft F auf ein Dämpfungselement 22 - vorzugsweise hergestellt aus Drahtwollgeflecht - und dann in einen Topf 23 übertragen. Von dem Topfboden 24 kann die Montagevorspannkraft F über Topfschulter 25 auf einen axialen Flächenabschnitt der Flächenstruktur 3 eingetragen werden. Zwischen der Tragstruktur 3 und der Flächenstruktur 2 ist ein Dichtelement 20 angeordnet, um einen ungewollten Gasübertritt zwischen Innenraum 34 und Umgebung zu erschweren oder zu verhindern. Außerdem kann ein Klemmringe 26 zwischen der Tragstruktur 3 und der Flächenstruktur 2 vorgesehen sein.

Weiterhin umgreift eine Abstandshülse 19 die Verbindungsmittel 13 und gewährleistet somit einen minimalen Klemmabstand zwischen dem ersten Axialanschlag 15 und dem zweiten Axialanschlag 17. Die Materialeigenschaften und Konzeption zwischen dem ersten und dem zweiten Axialanschlag 15 und 17 sowie der Klemmabstand bestimmen die Höhe der Montagevorspannkraft F.

Das aus den mehreren Tragstrukturen 3 zusammengesetzte Traggerüst 33 kann gemäß einer Ausführungsform weitere unterschiedliche Kompensationseinrichtungen 40a, 40b und 40c aufweisen. Diese Kompensationseinrichtungen 40a, 40b, 40c ermöglichen eine Kompensation von thermischen Dehnungen von Tragstrukturen 3a, 3b, 3c untereinander. Auf diese Weise kann eine ungleichmäßige thermische Dehnung durch eine ungleichmäßige örtliche Erwärmung des Traggerüsts 33 innerhalb desselben aufgefangen werden.

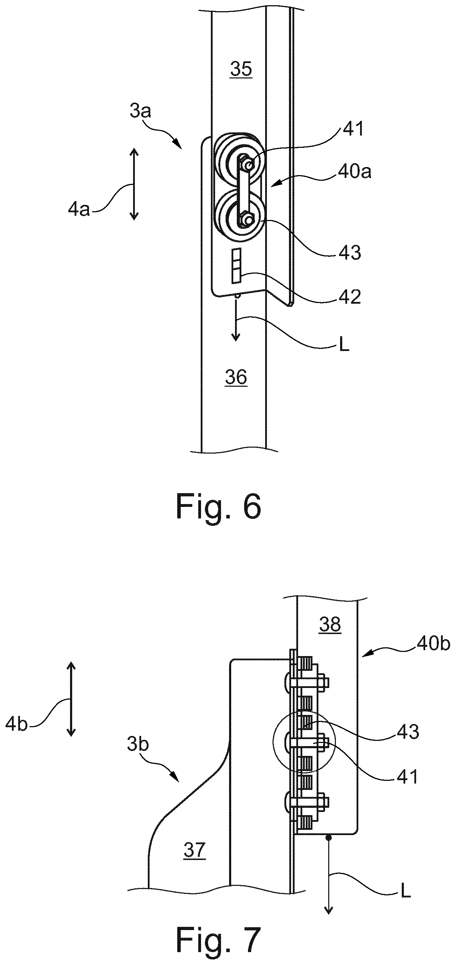

Eine erste Kompensationseinrichtung 40a ist dabei an einer Tragstruktur 3a, wirksam zwischen einem ersten Strukturteil 35 und einem zweiten Strukturteil 36 der Tragstruktur 3a vorgesehen, und dient dazu, eine Längendilatation durch thermische Dehnung der Tragstruktur 3a in sich zu kompensieren. Findet beispielsweise eine thermische Ausdehnung der in der Ecke des Feuerschutzschranks 30 angeordneten Tragstruktur 3a - detailliert dargestellt in Fig. 6 - in Längsrichtung 4a dieser Tragstruktur 3a statt, so kann diese Ausdehnung durch eine Stauchung der Tragstruktur 3a in sich ausgeglichen werden.

Dazu ist die Kompensationseinrichtung 40a mit einer Verbindungseinrichtung 41, einem Vorspannelement und einem Langloch 42 versehen. Das Vorspannelement 43 presst den ersten Strukturteil 35 gemäß einer bestimmten Vorspannkraft senkrecht zur Längsrichtung 4a auf den zweiten Strukturteil 36. Überschreitet eine Dehnungskraft - analog zum oben Gesagten - die durch die Vorspannkraft verursachte Haftkraft zwischen den Strukturteilen 35 und 36, so verschieben sich diese Strukturteile 35, 36 zueinander und kompensieren die Längendilatation. Das Langloch 42 und ein darin entsprechend ausgebildeter Vorsprung ermöglichen die Beibehaltung der Form der Tragstruktur 3a in Längsrichtung 4a.

Eine zweite Kompensationseinrichtung 40b wird in Fig. 7 gezeigt, wobei diese an einer Eckverbindung des Traggerüsts 33 vorgesehen ist. Mithilfe dieser Kompensationseinrichtung 40b wird ein Strukturteil 38 einer Tragstruktur 3b an einem Winkelstück 37 befestigt. Dabei kommt ein Vorspannelement 43 zum Einsatz, sodass eine Längendilatation bedingte Längsausdehnungskraft L durch eine Stauchung des Strukturteils 38 mit dem Winkelstück 37 in Längsrichtung 4b kompensiert wird.

In ähnlicher Weise ist eine T-Verbindung eines T-Strukturteils 3c mit einem weiteren Strukturteil 3 ausgestaltet (Fig. 8). Eine solche Verbindung weist dazu eine dritte Kompensationseinrichtung 40c auf, wodurch das senkrecht auf das weitere Strukturteil 3 stoßende T-Strukturteil 3c unter Vorspannung und in Längsrichtung 4c verschiebbar an dem weiteren Strukturteil 3 angeordnet ist. Im Falle einer thermischen Dehnung des weiteren Strukturteils 3 kann die Position des T-Strukturteil 3c in Längsrichtung 4c des weiteren Strukturteils 3 beibehalten werden.

Das beschriebene Konzept einer Ausführungsform eines Feuerschutzschranks 30 bewirkt sowohl in voll umfassender Ausführung gemäß aller beschriebenen Details als auch bereits in Detailausführung die Vorteile der Erfindung. Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die Erfindung ist durch den unabhängigen Anspruch 1 definiert. Beispielsweise ist denkbar, einen Feuerschutzschrank mit einer anderen Anzahl von Verbindungsstellen 7, Befestigungsstelle in 6 und/oder Kompensationseinrichtungen 40 zu gestalten. Auch könnten die Kompensationseinrichtungen 40 komplett weggelassen werden.

### Bezugszeichenliste

- 1: Verbundsystem
- 2: Flächenstruktur / erste Struktur
- 3: Tragstruktur / zweite Struktur
- 4: Längsrichtung
- 5: Axialrichtung
- 6: Befestigungsstelle
- 7: Verbindungsstelle
- 8: Aufnahme (Flächenstruktur)
- 9: vergrößerte Aufnahme (in Tragstruktur)

- 10: Verbindungsvorrichtung
- 11: Vorrichtungsabschnitt (Flächenstruktur-seitig)
- 12: Vorrichtungsabschnitt (Tragstruktur-seitig)
- 13: Verbindungsmittel
- 14: Schraubenkopf mit Scheibe
- 15: erster Axialanschlag (Flächenstruktur-seitig)
- 16: Schraubenmutter (beidseitig abgeflacht)
- 17: zweiter Axialanschlag (Tragstruktur-seitig)
- 18: Gleitflanke
- 19: Abstandshülse
- 20: Dichtelement
- 21: Spannelement
- 22: Dämpfungselement
- 23: Topf
- 24: Topfboden
- 25: Topfschulter
- 26: Klemmring
- 27: Radialflanke

- 30: Feuerschutzschrank
- 31: Tragstruktur
- 32: Wandpaneele
- 33: Traggerüst
- 34: Innenraum
- 35: Strukturteil
- 36: Strukturteil
- 37: Winkelstück
- 38: Strukturteil

- 40: Kompensationsreinrichtung
- 41: Verbindungseinrichtung
- 42: Langloch
- 43: Vorspannelement

- 100: Schienenfahrzeug
- 101: Wagenkasten
- 102: Steuerabschnitt,
- 103: Sitzbereich
- 104: Übergangsbereich

- F: Montagenormalkraft
- H: Haftkraft
- L: Längsausdehnungskraft

## Patentansprüche

1. Verbundsystem (1) aufweisend
- eine sich in einer Längsrichtung (4) erstreckende, als Flächenstruktur (2) ausgebildete erste Struktur, eine sich mindestens in der Längsrichtung (4) erstreckende und bezüglich der Längsrichtung (4) parallel an der ersten Struktur angeordnete, als Tragstruktur (3) zum Tragen der Flächenstruktur (2) ausgebildete zweite Struktur, und eine die Strukturen in einer Axialrichtung (5) senkrecht durchragende Verbindungsvorrichtung (10),
- wobei die Strukturen aus unterschiedlichen Werkstoffen mit unterschiedlichen Wärmeausdehnungskoeffizienten hergestellt sind,
- die Strukturen zum einen an einer Befestigungsstelle (6) aneinander befestigt sind und zusätzlich an einer bezüglich der Befestigungsstelle (6) in Längsrichtung (4) versetzten Verbindungsstelle (7) mittels der Verbindungsvorrichtung (10) durch Bereitstellen einer zwischen den Strukturen wirksamen, bestimmten Montagenormalkraft (F) miteinander verbunden sind,
- die Strukturen im Bereich der Verbindungsstelle (7) jeweils eine Aufnahme (8, 9) zur Aufnahme jeweils eines Vorrichtungsabschnitts (11, 12) der Verbindungsvorrichtung (10) aufweisen,
- wobei eine der Aufnahmen (9) in Längsrichtung (4) größer ist, als der in dieser vergrößerten Aufnahme (9) angeordnete Vorrichtungsabschnitt (12), sodass die Verbindungsvorrichtung (10) in der entsprechenden Struktur in Längsrichtung (4) verschiebbar angeordnet ist,
- wobei die Verbindungsvorrichtung (10) Verbindungsmittel (13) mit einem ersten Axialanschlag (15), einem zweiten, in Axialrichtung (5) der Verbindungsvorrichtung (10) axial positionierbaren Axialanschlag (17), eine Abstandshülse (19), ein axial wirkendes Dichtelement (20) und ein Spannelement (21) aufweist, und
- wobei, jeweils in montiertem Zustand, die Abstandshülse (19) derart zwischen den Axialanschlägen (15, 17) angeordnet ist und die Verbindungsmittel (13) umgreift, dass die Verbindungsvorrichtung (10) in montiertem Zustand zwischen den Axialanschlägen (15, 17) einen minimalen axialen Klemmabstand ausbildet und gewährleistet, das Dichtelement (20) zwischen der Tragstruktur (3) und der Flächenstruktur (2) angeordnet ist, und das Spannelement (21) zum Übertragen der Montagenormalkraft (F) zwischen dem ersten Axialanschlag (15) und dem Flächenelement (2) angeordnet ist.

2. Verbundsystem (1) nach Anspruch 1, aufweisend eine weitere Verbindungsvorrichtung (10), wobei die Befestigungsstelle als eine weitere Verbindungsstelle (7) ausgebildet ist, und wobei die Strukturen mittels der weiteren Verbindungsvorrichtung (10) an der weiteren Verbindungsstelle (7) miteinander verbunden sind.

3. Verbundsystem (1) nach Anspruch 1 oder 2,
- wobei mindestens die Verbindungsvorrichtung (10) und die Strukturen derart geometrisch gestaltet sind und derartige Elastizitätscharakteristika aufweisen, sodass in montiertem Zustand die bestimmte Montagenormalkraft (F) zwischen den Strukturen erzeugt wird, und
- wobei das tribologische System zwischen der ersten Struktur, der zweiten Struktur, der Verbindungvorrichtung (10), und/oder der vergrößerten Aufnahme (9) derart gestaltet ist, dass bei einer Temperaturänderung der Strukturen von mindestens 60 °K, insbesondere 80 °K, und bevorzugt 100 °K, eine zwischen den Strukturen wirkende thermisch bedingte Längsausdehnungskraft (L) größer als eine durch die Montagenormalkraft (F) verursachte Haftkraft (H) ist.

4. Verbundsystem (1) nach einem der voranstehenden Ansprüche, wobei, in montiertem Zustand, die Montagenormalkraft (F) durch Bereitstellen des Klemmabstands zwischen den Axialanschlägen und durch Zusammenpressen des Spannelements (21), der Flächenstruktur (2), des Dichtelements (19) und der Tragstruktur (3) zwischen den Axialanschlägen (15, 17) auf den Klemmabstand erzeugt wird.

5. Verbundsystem (1) nach einem der voranstehenden Ansprüche, wobei die Verbindungsvorrichtung (10) einen Klemmring (26) aufweist, welcher in Axialrichtung (5) parallel zum Dichtelement (19) angeordnet ist.

6. Verbundsystem (1) nach einem der voranstehenden Ansprüche, wobei das Spannelement (21) ein Dämpfungselement (22), insbesondere ausgebildet als Ganzmetallkissen, und einen Topf (23) mit einem Topfboden (24) zum Aufnehmen des Dämpfungselements (22) und einer Topfschulter (25) zum Einleiten der Montagenormalkraft (F) in die Flächenstruktur (2) aufweist, wobei das Dämpfungselement (22) in Axialrichtung (5) gegenüber dem ersten Axialanschlag (15) und dem Topfboden (24) abgestützt ist.

7. Verbundsystem (1) nach Anspruch 6, wobei der Topf (23) eine Kegelstumpfähnliche Form aufweist.

8. Verbundsystem (1) nach einem der voranstehenden Ansprüche, wobei das Dichtelement (20) ein intumeneszentes Material aufweist.

9. Verbundsystem (1) nach einem der voranstehenden Ansprüche, wobei die vergrößerte Aufnahme (9) in der Tragstruktur (3) vorgesehen ist und senkrecht zur Längsrichtung (4) einen in Längsrichtung (4) der vergrößerten Aufnahme im Wesentlichen gleich bleibenden Gleitabstand ausbildet, wobei der in der vergrößerten Aufnahme (9) aufgenommene Vorrichtungsabschnitt (12) der Verbindungsvorrichtung (10) zwei, mit der vergrößerten Aufnahme (9) korrespondierende Gleitflanken (18) aufweist, sodass der Vorrichtungsabschnitt (12) drehfest, aber in Längsrichtung (4) verschiebbar in der vergrößerten Aufnahme (9) gelagert ist.

10. Verbundsystem (1) nach einem der voranstehenden Ansprüche, wobei ein Wärmeausdehnungskoeffizient der Flächenstruktur (2), insbesondere in Längsrichtung (4), weniger als 13x10⁻⁶ pro Kelvin beträgt, insbesondere weniger als 12,5x10⁻⁶ pro Kelvin, und/oder weniger als 12x10⁻⁶ pro Kelvin, und/oder wobei ein Wärmeausdehnungskoeffizient der Tragstruktur (4), insbesondere in Längsrichtung (4), mehr als 13x10⁻⁶ pro Kelvin beträgt, insbesondere mehr als 13,1x10⁻⁶ pro Kelvin, und/oder mehr als 13,5x10⁻⁶ pro Kelvin, und insbesondere weniger als 16,6x10⁻⁶ pro Kelvin.

11. Feuerschutzschrank (30) zum Aufnehmen von elektrischen Komponenten, aufweisend mindestens ein Traggerüst (33) und daran befestigte Wandpaneele (32),
- wobei die Gesamtheit der Wandpaneele (32) einen Innenraum (34) des Feuerschutzschranks (30) definiert, und insbesondere das Traggerüst (33) im Innenraum (34) vorgesehen ist,
- Traggerüst (33) und Wandpaneele (34) von mindestens einem Verbundsystem (1) nach einem der voranstehenden Ansprüche derart gebildet werden, sodass das Traggerüst (33) mindestens eine Mehrzahl von Tragstrukturen (3) und ein Wandpaneel (32) mindestens eine Flächenstruktur (2) aufweist, wobei ein Wandpaneel (32) in Längsrichtung (4) einer Tragstruktur (3) gemäß deren vergrößerten Aufnahme (9) verschiebbar an einer jeweiligen Tragstruktur (3) des Traggerüsts (33) befestigt ist, und
- wobei die Flächenstruktur (2) aus einem nicht brennbaren, brandhemmenden und/oder strukturfesten Material, insbesondere aus einem bis zu einer Umgebungstemperatur von 783 °C nicht-brennbaren Material, hergestellt ist.

12. Feuerschutzschrank (30) nach Anspruch 11, aufweisend mindestens eine Kompensationseinrichtung (40a, 40b, 40c) zum Kompensieren einer thermischen Längendilatation einer Tragstruktur (2, 31), wobei die Kompensationseinrichtung (40a, 40b, 40c) innerhalb einer Tragstruktur (2; 31) und/oder zwischen zwei Tragstrukturen (2, 31) angeordnet ist.

13. Feuerschutzschrank (30) nach Anspruch 12, wobei die Kompensationseinrichtung (40) mindestens eine vorgespannte Verbindungseinrichtung (41) aufweist, welche zwischen zwei Strukturteilen (35, 36) einer Tragstruktur (31) und/oder zwischen zwei Tragstrukturen (2, 31) zum Erzeugen einer Montagenormalkraft angeordnet ist, und wobei mindestens ein Strukturteil (35, 36) und/oder mindestens eine der Tragstrukturen (2, 31) ein Langloch (42) zur Aufnahme der Verbindungeinrichtung (41) aufweist.

14. Transportmittel, insbesondere Fahrzeug, Schienenfahrzeug (100) oder Flugzeug, aufweisend einen Feuerschutzschrank (30) nach Anspruch 11 bis 13.

## Claims

1. An interconnecting system (1) comprising
- a first structure extending in a longitudinal direction (4) and formed as a surface structure (2), a second structure extending at least in the longitudinal direction (4) and arranged parallel to the first structure with respect to the longitudinal direction (4) and formed as a supporting structure (3) for supporting the surface structure (2), and a connecting device (10) extending perpendicularly through the structures in an axial direction (5),
- wherein the structures are made of different materials having different coefficients of thermal expansion,
- the structures are fastened to one another on the one hand at a fastening point (6) and are additionally connected to one another at a connecting point (7) with a longitudinal offset (4) with respect to the fastening point (6) by means of the connecting device (10) by providing a specific mounting normal force (F) effective between the structures,
- the structures each have, in the region of the connecting point (7), a receiving means (8, 9) for receiving a respective device section (11, 12) of the connecting device (10)
- wherein one of the receiving means (9) is larger in longitudinal direction (4) than the device section (12) arranged in this enlarged receiving means (9), such that the connecting device (10) is arranged displaceable in the corresponding structure in longitudinal direction (4),
- wherein the connecting device (10) comprises connecting means (13) with a first axial stop (15), a second axial stop (17) which is axially adjustable in the axial direction (5) of the connecting device (10), a spacer sleeve (19), an axially acting sealing element (20) and a clamping element (21), and
- wherein, in each case in the assembled state, the spacer sleeve (19) is arranged between the axial stops (15, 17) and engages around the connecting means (13) in in such a way that, in the assembled state, the connecting device (10) has a minimum axial clamping force between the axial stops (15, 17), the sealing element (20) is arranged between the supporting structure (3) and the surface structure (2), and the clamping element (21) for transmitting the mounting normal force (F) is arranged between the first axial stop (15) and the surface structure (2).

2. The interconnecting system (1) according to claim 1, comprising a further connecting device (10), wherein the mounting point is formed as a further connecting point (7), and wherein the structures are connected to each other by means of the further connecting device (10) at the further connecting point (7).

3. The interconnecting system (1) according to claim 1 or 2,
- wherein at least the connecting device (10) and the structures are geometrically configured and have such elasticity characteristics such that, in the assembled state, the determined mounting normal force (F) is generated between the structures, and
- wherein the tribological system between the first structure, the second structure, the connecting device (10), and/or the enlarged receiving means (9) is designed in such a way that at a temperature change of the structures of at least 60 °K, in particular 80 °K, and preferably 100 °K, a thermally induced longitudinal expansion force (L) acting between the structures is greater than an adhesive force (H) caused by the mounting normal force (F).

4. The interconnecting system (1) according to one of the preceding claims, wherein, in the assembled state, the mounting normal force (F) is generated by providing the clamping distance between the axial stops and by compressing the clamping element (21), the surface structure (2), the sealing element (19) and the supporting structure (3) between the axial stops (15, 17) to the clamping distance.

5. The interconnecting system (1) according to one of the preceding claims, wherein the connecting device (10) comprises a clamping ring (26), which is arranged parallel to the sealing element (19) in the axial direction (5).

6. The interconnecting system (1) according to one of the preceding claims, wherein the clamping element (21) comprises a damping element (22), in particular formed as an all-metal cushion, and a cup (23) with a cup base (24) for receiving the damping element (22) and a cup shoulder (25) for introducing the mounting normal force (F) into the surface structure (2), wherein the damping element (22) is supported in the axial direction (5) with respect to the first axial stop (15) and the cup base (24).

7. The interconnecting system (1) according to claim 6, wherein the cup (23) has a truncated cone-like shape.

8. The interconnecting system (1) according to any one of the preceding claims, wherein the sealing element (20) comprises an intumescent material.

9. The interconnecting system (1) according to any one of the preceding claims, wherein the enlarged receiving means (9) is arranged in the supporting structure (3) and forms, perpendicular to the longitudinal direction (4), a gliding distance that remains substantially constant in the longitudinal direction (4) of the enlarged receiving means, wherein the device section (12) of the connecting device (10) received in the enlarged receiving means (9) has two sliding flanks (18) corresponding to the enlarged receiving means (9), so that the device section (12) is supported in the enlarged receiving means (9) in a rotationally fixed but longitudinally displaceable manner.

10. The interconnecting system (1) according to any one of the preceding claims, wherein a coefficient of thermal expansion of the surface structure (2), in particular in the longitudinal direction (4), is less than 13x10⁻⁶ per Kelvin, in particular less than 12.5x10⁻⁶ per Kelvin, and/or less than 12x10⁻⁶ per Kelvin, and/or wherein a coefficient of thermal expansion of the support structure (4), in particular in the longitudinal direction (4), is more than 13x10⁻⁶ per Kelvin, in particular more than 13.1x10⁻⁶ per Kelvin, and/or more than 13.5x10⁻⁶ per Kelvin, and in particular less than 16.6x10⁻⁶ per Kelvin.

11. A fire cabinet (30) for housing electrical components, comprising at least one support frame (33) and wall panels (32) attached thereto,
- wherein the entirety of the wall panels (32) defines an inner volume (34) of the fire protection cabinet (30), and in particular the support frame (33) is provided in the inner volume (34),
- wherein supporting framework (33) and wall panels (34) of at least one interconnecting system (1) according to one of the preceding claims are formed in such a way that the supporting framework (33) has at least one plurality of supporting structures (3) and a wall panel (32) has at least one surface structure (2), a wall panel (32) being fastened to a respective supporting structure (3) of the supporting framework (33) such that it can be displaced in the longitudinal direction (4) of a supporting structure (3) in accordance with its enlarged receiving means (9), and
- wherein the surface structure (2) is made of a non-combustible, fire-retardant and/or structurally stable material, in particular of a material which is non-combustible to an ambient temperature of 783 °C.

12. The fire protection cabinet (30) according to claim 11, comprising at least one compensation device (40a, 40b, 40c) for compensating a thermal longitudinal dilatation of a supporting structure (2, 31), wherein the compensation device (40a, 40b, 40c) is arranged within a supporting structure (2; 31) and/or between two supporting structures (2, 31).

13. The fire protection cabinet (30) according to claim 12, wherein the compensation device (40) has at least one pretensioned connecting device (41), which is arranged between two structural parts (35, 36) of a supporting structure (31) and/or between two supporting structures (2, 31) for generating a mounting normal force, and wherein at least one structural part (35, 36) and/or at least one of the supporting structures (2, 31) has an elongated hole (42) for receiving the connecting device (41).

14. Transportation means, in particular vehicle, rail vehicle (100) or aircraft, comprising a fire protection cabinet (30) according to claims 11 to 13.

## Revendications

1. Système de fixation (1) présentant
- une première structure conçue en tant que structure de surface (2) s'étendant dans une direction longitudinale (4), une seconde structure conçue en tant que structure de support (3) pour supporter la structure de surface (2), s'étendant au moins dans la direction longitudinale (4) et disposée parallèlement à la première structure par rapport à la direction longitudinale (4), et un dispositif de liaison (10) faisant saillie perpendiculairement aux structures dans une direction axiale (5),
- les structures étant fabriquées à partir de matériaux différents avec des coefficients de dilatation thermique différents,
- les structures étant fixées l'une à l'autre à un point de fixation (6) et étant également reliées l'une à l'autre à un point de liaison (7), décalé dans la direction longitudinale (4) par rapport au point de fixation (6), au moyen du dispositif de liaison (10) par la fourniture d'une force normale de montage (F) déterminée et effective entre les structures,
- les structures présentant chacune dans la zone du point de liaison (7) un réceptacle (8, 9) pour recevoir chacune une section de dispositif (11, 12) du dispositif de liaison (10),
- l'un des réceptacles (9) étant plus grand dans la direction longitudinale (4) que la section de dispositif (12) disposée dans ledit réceptacle agrandi (9), de sorte que le dispositif de liaison (10) est disposé de manière déplaçable dans la structure correspondante dans la direction longitudinale (4),
- le dispositif de liaison (10) présentant des moyens de liaison (13) comportant une première butée axiale (15), une seconde butée axiale (17) qui peut être positionnée axialement dans la direction axiale (5) du dispositif de liaison (10), une douille entretoise (19), un élément d'étanchéité agissant axialement (20) et un élément de tension (21), et
- dans l'état monté, la douille entretoise (19) étant disposée entre les butées axiales (15, 17) et venant en prise autour des moyens de liaison (13) de telle sorte que le dispositif de liaison (10), à l'état monté, forme et assure une distance de serrage axiale minimale entre les butées axiales (15, 17), l'élément d'étanchéité (20) étant disposé entre la structure de support (3) et la structure de surface (2), et l'élément de tension (21) étant disposé entre la première butée axiale (15) et l'élément de surface (2) pour transmettre la force normale de montage (F).

2. Système de fixation (1) selon la revendication 1, présentant un autre dispositif de liaison (10), dans lequel le point de fixation est conçu en tant qu'autre point de liaison (7) et dans lequel les structures sont reliées l'une à l'autre à l'autre point de liaison (7) au moyen de l'autre dispositif de liaison (10).

3. Système de fixation (1) selon la revendication 1 ou 2,
- dans lequel au moins le dispositif de liaison (10) et les structures sont conçus géométriquement de telle sorte, et ont des caractéristiques d'élasticité telles, qu'à l'état monté, la force normale de montage (F) déterminée est générée entre les structures, et
- dans lequel le système tribologique est conçu entre la première structure, la seconde structure, le dispositif de liaison (10), et/ou le réceptacle agrandi (9) de telle sorte que, suite à un changement de température des structures d'au moins 60 °K, en particulier 80 °K, et de préférence 100 °K, une force de dilatation longitudinale induite thermiquement (L) agissant entre les structures est supérieure à une force adhésive (H) provoquée par la force normale de montage (F).

4. Système de fixation (1) selon l'une des revendications précédentes, dans lequel, à l'état monté, la force normale de montage (F) est générée en fournissant la distance de serrage entre les butées axiales et en comprimant ensemble l'élément de tension (21), la structure de surface (2), l'élément d'étanchéité (19) et la structure de support (3) entre les butées axiales (15, 17) sur la distance de serrage.

5. Système de fixation (1) selon l'une des revendications précédentes, dans lequel le dispositif de liaison (10) présente une bague de serrage (26) qui est disposée dans la direction axiale (5) parallèlement à l'élément d'étanchéité (19).

6. Système de fixation (1) selon l'une des revendications précédentes, dans lequel l'élément de tension (21) présente un élément d'amortissement (22), en particulier réalisé sous forme de coussin entièrement métallique, et un pot (23) comportant un fond de pot (24) pour recevoir l'élément d'amortissement (22) et un épaulement de pot (25) pour introduire la force normale de montage (F) dans la structure de surface (2), l'élément d'amortissement (22) étant appuyé dans la direction axiale (5) contre la première butée axiale (15) et le fond de pot (24).

7. Système de fixation (1) selon la revendication 6, dans lequel le pot (23) présente une forme similaire à un cône tronqué.

8. Système de fixation (1) selon l'une des revendications précédentes, dans lequel l'élément d'étanchéité (20) présente un matériau intumescent.

9. Système de fixation (1) selon l'une des revendications précédentes, dans lequel le réceptacle élargi (9) est prévu dans la structure de support (3) et forme, perpendiculairement à la direction longitudinale (4), une distance de coulissement sensiblement constante dans la direction longitudinale (4) du réceptacle agrandi, la section de dispositif (12) du dispositif de raccordement (10) reçue dans le réceptacle agrandi (9) présentant deux flancs de coulissement (18) correspondant au réceptacle agrandi (9), de telle sorte que la section de dispositif (12) est logée dans le réceptacle agrandi (9) de manière non rotative mais déplaçable dans la direction longitudinale (4).

10. Système de fixation (1) selon l'une des revendications précédentes, dans lequel un coefficient de dilatation thermique de la structure de surface (2), en particulier dans la direction longitudinale (4), est inférieur à 13 x 10⁻⁶ Kelvin puissance moins un, en particulier inférieur à 12,5 x 10⁻⁶ Kelvin puissance moins un, et/ou inférieur à 12 x 10⁻⁶ Kelvin puissance moins un, et/ou un coefficient de dilatation thermique de la structure de support (4), en particulier dans la direction longitudinale (4), est supérieur à 13 x 10⁻⁶ Kelvin puissance moins un, en particulier supérieur à 13,1 x 10⁻⁶ Kelvin puissance moins un, et/ou supérieur à 13,5 x 10⁻⁶ Kelvin puissance moins un, et en particulier inférieur à 16,6 x 10⁻⁶ Kelvin puissance moins un.

11. Armoire de protection contre l'incendie (30) permettant de recevoir des composants électriques, présentant au moins une armature (33) et des panneaux muraux (32) fixés sur celle-ci,
- dans laquelle l'ensemble des panneaux muraux (32) définit un espace intérieur (34) de l'armoire de protection contre l'incendie (30), et en particulier l'armature (33) est prévue dans l'espace intérieur (34),
- l'armature (33) et les panneaux muraux (32) sont formés d'au moins un système de fixation (1) selon l'une des revendications précédentes de telle sorte que l'armature (33) présente au moins une pluralité de structures de support (3) et un panneau mural (32) présente au moins une structure de surface (2), un panneau mural (32) étant fixé de manière déplaçable à une structure de support (3) correspondante de l'armature (33) dans la direction longitudinale (4) d'une structure de support (3) selon son réceptacle élargi (9), et
- la structure de surface (2) étant fabriquée à partir d'un matériau incombustible, ignifuge et/ou structurellement fixe, en particulier à partir d'un matériau incombustible jusqu'à une température ambiante de 783 °C.

12. Armoire de protection contre l'incendie (30) selon la revendication 11, présentant au moins un dispositif de compensation (40a, 40b, 40c) permettant de compenser une dilatation thermique en longueur d'une structure de support (2, 31), dans laquelle le dispositif de compensation (40a, 40b, 40c) est disposé à l'intérieur d'une structure de support (2; 31) et/ou entre deux structures de support (2, 31).

13. Armoire de protection contre l'incendie (30) selon la revendication 12, dans laquelle le dispositif de compensation (40) présente au moins un dispositif de liaison précontraint (41), lequel est disposé entre deux parties de structure (35, 36) d'une structure de support (31) et/ou entre deux structures de support (2, 31) pour générer une force normale de montage, et au moins une partie de structure (35, 36) et/ou au moins une des structures de support (2, 31) présentant un trou oblong (42) pour recevoir le dispositif de liaison (41).

14. Moyen de transport, en particulier véhicule, véhicule ferroviaire (100) ou avion, présentant une armoire de protection contre l'incendie (30) selon les revendications 11 à 13.
